# EUROPEAN PATENT APPLICATION

(11) **EP 2 724 799 A1**
(43) Date of publication of application: **30.04.2014**
(21) Application number: 12189997.5
(22) Date of filing: 25.10.2012
(51) Int. Cl.: B22F 3/105, B22F 5/04

(54) **Method for Manufacturing a Component Having a Damping Structure**

(71) Applicant: Alstom Technology Ltd, 5400 Baden (CH)
(72) Inventor: BRANDL, Herbert, 79761 Waldshut-Tiengen (DE); TSYPKAYKIN, Igor, 5300 Turgi (CH)

(57) **Abstract**

The method for manufacturing a component (1) having a damping structure (2) comprises a)providing a substrate base (4), then b)providing a layer (5) of particle material (6) on the substrate base (4), then c) welding and/or sintering at least a part of the particle material (6) of the layer (5) of particle material (6) according to a defined pattern, then g)providing an additional layer (9) of particle material (6) on top of the layer of particle material whose particle material (6) has already been welded and/or sintered, then e) welding and/or sintering at least a part of the particle material (6) of the additional layer (9) of particle material according to a defined pattern, then f) repeating steps d) and e) and define the component (1). In addition, at least a cavity (11) is defined in the component (1) during step f), and the at least a cavity (11) is closed without removing at least a part of the particle material (6) from it.

## Description

### TECHNICAL FIELD

The present disclosure relates to a method for manufacturing a component having a damping structure.

The component can be a part of a large machine such as a gas or steam turbine, for example a blade, a vane, a casing or also parts thereof, or parts of a large electric generator such as a hydro generator or a turbogenerator, but in different application the component can be a part of a different device that requires damping, such as for example casings of PCs, fans, etc. In the following particular reference to a blade or vane of a turbine such as a gas turbine will be made, the scope of the disclosure is anyhow not limited to such an application.

### BACKGROUND

The blade length of the last turbine stage has a major impact on engine performance. In particular, by increasing the last turbine blade length, the engine efficiency can be increased.

However, longer blades suffer vibration problems (e.g. flutter) and thus require damping elements to reduce vibration stress.

State of the art of damping elements include under-platform dampers, but these under-platform dampers do not provide enough damping for very long blades and they can be used only for the vibration modes with significant relative movement at the platforms.

Other damping elements are the so called impact dampers (described in US 6,827,551) or particle dampers (described in US 6,224,341).

Particle dampers include a cavity in the component whose vibrations need to be damped; the cavity is fully or partly filled with particle material.

Particle dampers proved to be quite effective in damping vibrations, but their manufacturing is not easy.

For example, the cavities must be cast and after casting the cavities have to be filled with particle material. Finally the cavities must be closed e.g. by a threaded plug.

However, the requirements for the location, size and geometry of the cavities must accept compromises (e.g. in design or use of non-optimal solutions).

In addition, filling the cavities after they have been realised can be troublesome and costly, because of the need to handle an already casted component that shall not be damaged and to introduce the particle material in the cavities that can be small or whose opening are small or difficult to access.

### SUMMARY

An aspect of the disclosure includes providing a method for manufacturing components having a damping structure that allows great flexibility for the location, size and geometry of the cavities and, at the same time, counteracts the drawbacks caused by the needs of introducing particle material into the cavities.

These and further aspects are attained by providing a method in accordance with the accompanying claims.

Advantageously, the method can be used for manufacturing components having a thin thickness.

For example the method can be used to manufacture blades or vanes of turbines, compressors, etc, but also other structure for power generation, automotive, small appliances or devices such as PCs, fans, etc requiring damping to improve service lifetime.

### BRIEF DESCRIPTION OF THE DRAWINGS

Further characteristics and advantages will be more apparent from the description of a preferred but non-exclusive embodiment of the method, illustrated by way of non-limiting example in the accompanying drawings, in which:
Figures 1 through 7 shows the steps of an embodiment of the method;
Figure 8 shows a component manufactured according to a different embodiment of the method;
Figures 9 through 11 show airfoils made according to the method;
Figure 12 is a cross section through line XII-XII of figure 9;
Figures 13 through 15 show inserts according to the method,
Figures 16 through 18 show cross sections through lines XVI-XVI, XVII-XVII and XVIII-XVIII of figures 13, 14 and 15;
Figure 19 shows a component manufactured according to the method being an insert to be connected to a machine or part thereof;

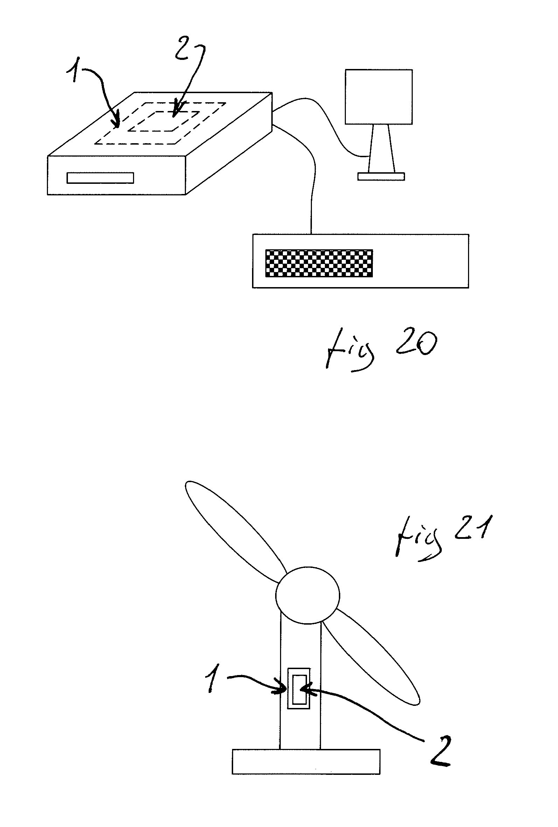

Figures 20 and 21 show different appliances provided with a component manufactured according to the method.

### DETAILED DESCRIPTION OF EXEMPLARY EMBODIMENTS

With reference to the figures, these show a method for manufacturing a component 1 having a damping structure 2.

The component can be any kind of component that requires damping.

The method includes the steps of:
a) providing a substrate base 4, then
b) providing a layer 5 of particle material 6 on the substrate base 4, then
c) welding and/or sintering (for example through a laser source 8) at least a part of the particle material 6 of the layer 5 of particle material according to a defined pattern 7, then
d) providing an additional layer 9 of particle material 6; this additional layer is provided on top of the layer 5 whose particle material 6 has already been welded and/or sintered or on top of additional layers 9 welded or sintered before, then
e) welding and/or sintering (for example through the laser source 8) at least a part of the particle material 6 of the additional layer 9 of particle material according to a defined pattern 7, thus
f) repeating steps d) and e) and define the component 1.

While welding and/or sintering (during step f) at least a cavity 11 is defined in the component 1.

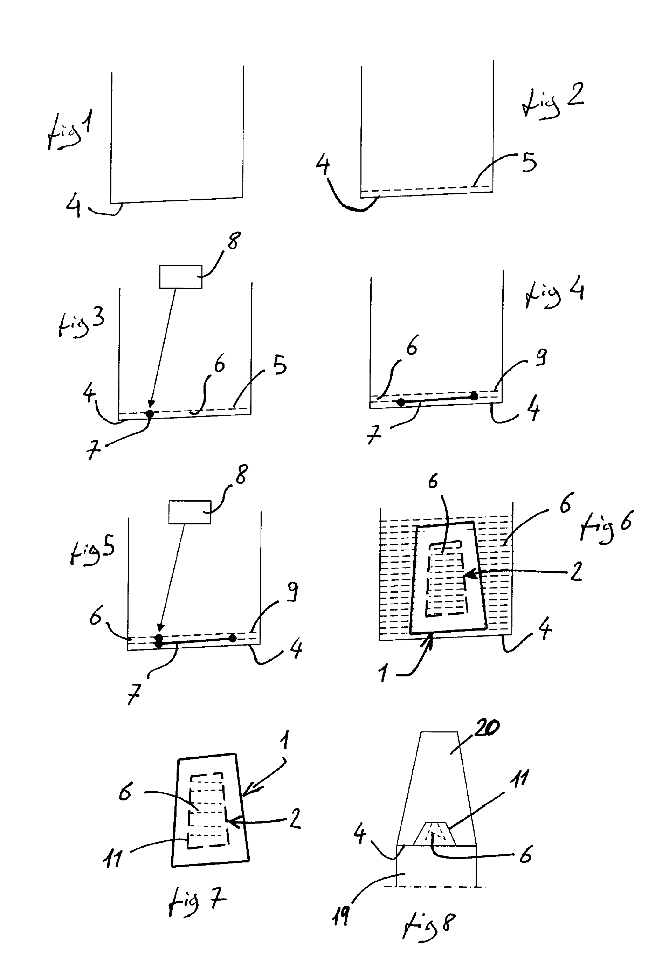

Figure 7 shows a component 1 such as a blade manufactured according to the present method. This component 1 has a damping structure 2 that comprises the cavity 11 and the particle material 6 in the cavity 11.

Welding and/or sintering can be achieved by any appropriate technique, such as for example laser, electron beam, etc.; in addition manufacturing can occur by only welding, only sintering or by both welding and sintering.

Since during welding and/or sintering the component 1 is defined by joining the particle material 6 defining the pattern 7 and since this pattern 7 encloses particle material 6, after the cavity 11 has been defined it contains particle material 6. In addition, thanks to the manufacturing process any kind of shape can be easily manufactured.

The cavity 11 with the particle material 6 inside of it defines the damping structure 2.

The cavity 11 is closed without removing at least a part of the particle material 6 from it. In other words, while the component 1 is manufactured, the cavity 11 is defined in it and because of the manufacturing process this cavity 11 after manufacturing is already filled with particle material 6. This particle material 6 is not removed at all or is only partly removed from the cavity 11.

In a first example of the method a closed cavity 11 is defined; i.e. the cavity 11 has no openings. In this case no particle material 6 is removed from the cavity 11.

In a different embodiment of the method, a cavity 11 with one or more apertures is defined; in this case a part of the particle material 6 can be removed from the cavity 11.

The aperture can be defined during welding and/or sintering (step f) above) or it can also be realised after welding and/or sintering, for example by drilling.

The aperture or apertures can then be closed with a plug 15.

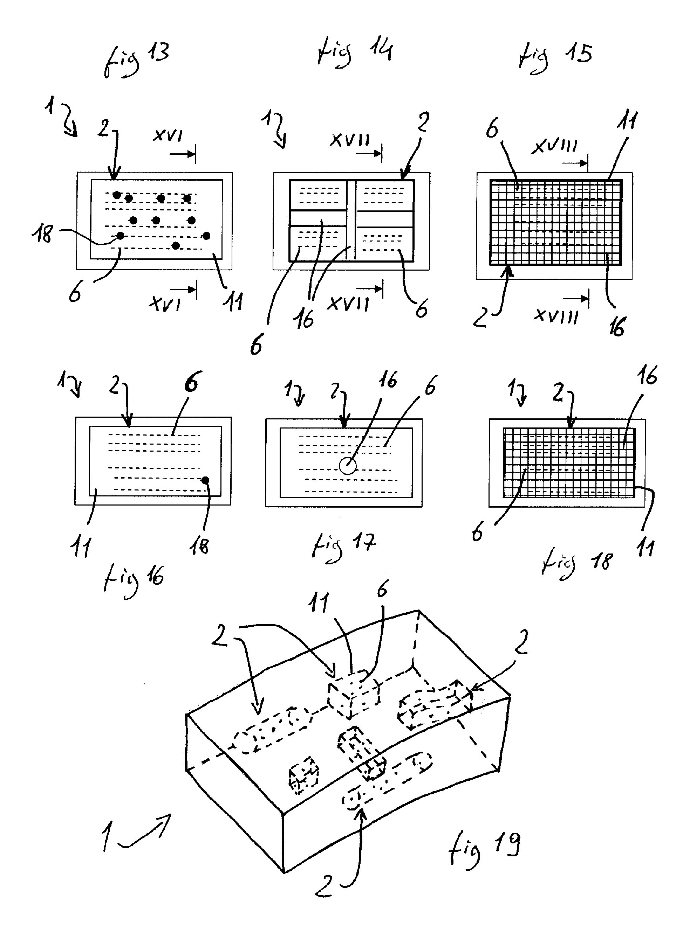

The cavity 11 can also be provided with stiffening elements 16. The stiffening elements 16 can be made like e.g. rods connecting opposite faces of the cavity 11 (as shown in figures 14 and 17); naturally even if figures 14 and 17 show two such perpendicular rods, any number of rods in any direction is possible. In addition, the stiffening elements such as rods can define a grid or mesh like in figures 15 and 18; the grid or mesh defines cells that are preferably interconnected among one another.

The attached figures show the stiffening elements 16 only for an insert, it is anyhow clear that the stiffening elements 16 can be provided with any of the embodiments of the invention, such as for example for a component that defines a blade or vane or for a component that defines only an airfoil that is connected to a root to define a blade or vane or any other component 1 with a damping structure 2.

During welding and/or sintering the particle material 6 can be welded or sintered in order to define larger elements 18, i.e. elements larger than particle material 6 but smaller compared to the cavity 11 that contains them (figures 13 and 16). In this case the larger elements 18 are surrounded by the particle material 6.

In this case the particle material 6 can be not removed, or can be partly removed or can be totally removed from the cavity 11, such that the cavity 11 has the larger elements 18 surrounded by particle material in the first case, larger elements 18 surrounded by particle material 6 (in this case the amount of the particle material is less than in the previous case) or the cavity 11 can contain only the larger elements 18 without any substantial amount of particle material 6, because it has been removed.

The particle material 6 can be different according to the component.

For example the particle material can be a metallic particle material, preferably a weldable or sinterizable particle material. The particle material is preferably in powder form and has a grain size (different grain sizes are possible) suitable for the particular component to manufacture.

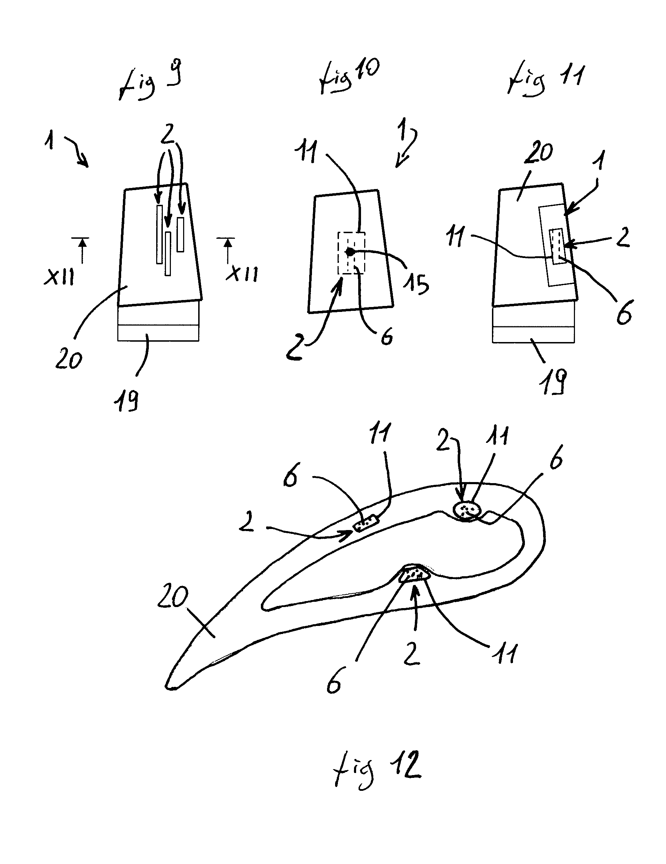

In addition, the method can be used to manufacture components 1 that are:
- an whole complex element, such as a whole blade or vane, (as shown in figure 9, the entire blade includes a root 19 and an airforl 20 extending from the root 19), or
- a part of a more complex element, such as an airfoil of a blade having an airfoil connected to a root; figure 8 shows such an airfoil 20 (the root is not shown); in this case the root is for example manufactured by casting (the root can be the substrate base 4), and the airfoil 20 can be manufactured according to the described process (with the root as a substrate base 4); this way the airfoil 20 is joined to the root 19, or
- an insert to be connected to a complex element, for example figure 11 shows the component 1 being an insert connected to an airfoil 20. In this case the blade (i.e. root 19 and airfoil 20) are manufactured in a traditional way for example by casting, and the component 1 being the insert with the cavity 11 filled with particle material 6 is manufactured according to the method of the present disclosure and is then connected to the airfoil 20 at a later stage, e.g. by means of welding or brazing.

Figure 19 shows a schematic example of a component 1 being an insert. The component 1 (insert) has a number of damping structures 2 with cavities 11 and particle material 6. The cavities 11 have different shape and location to better counteract the oscillations.

For example, the component 1 can be a thin wall component such as an airfoil or a part thereof.

If there is no need to connect any element to the component 1 under manufacturing, the substrate base 4 can be a particle material layer.

If the component under manufacturing needs to be connected to a pre-manufactured body (such as for example a root 19 of a blade), this pre-manufactured body can advantageously be the substrate base 4. For example figure 8 shows an example of manufacturing of a blade where the root 19 is pre-manufactured by casting and the airfoils 20 is manufactured according to the process. In this case the root 19 (i.e. the pre-manufactured body) is the substrate base 4 for the process.

Figures 9 and 12 shows an example of an airfoil 20 manufactured according to the method, in particular in figures 9 and 12 the airfoil 20 is shown with three damping elements at different locations.

It is clear that the number of the cavities 11, their size, orientation and location can be any according to the particular design and operating conditions.

In different examples, the particle material 6 can also be a plastic particle material (i.e. plastic such as a polymer).

In this case the component can be a part of an appliance that needs damping, such as a PC casing (figure 16), a fan (figure 17), etc.

Naturally the features described may be independently provided from one another.

In practice the materials used and the dimensions can be chosen at will according to requirements and to the state of the art.

### REFERENCE NUMBERS

- 1: component
- 2: damping structure
- 4: substrate base
- 5: layer
- 6: particle material
- 7: pattern
- 8: laser source
- 9: additional layer
- 11: cavity
- 15: plug
- 16: stiffening elements
- 18: elements
- 19: root
- 20: airfoil

## Claims

1. A method for manufacturing a component (1) having a damping structure (2), the method comprising
a) providing a substrate base (4), then
b) providing a layer (5) of particle material (6) on the substrate base (4), then
c) welding and/or sintering at least a part of the particle material (6) of the layer (5) of particle material (6) according to a defined pattern (7), then
d) providing an additional layer (9) of particle material (6) on top of the layer of particle material whose particle material (6) has already been welded and/or sintered, then
e) welding and/or sintering at least a part of the particle material (6) of the additional layer (9) of particle material according to a defined pattern (7), then
f) repeating steps d) and e) and define the component (1),
**characterised by**
defining at least a cavity (11) in the component (1) during step f),
closing the at least a cavity (11) without removing at least a part of the particle material (6) from it.

2. The method according to claim 1, **characterised by** defining at least a closed cavity (11).

3. The method according to claim 1, **characterised by** defining at least a cavity (11) with an aperture and by closing the aperture with a plug (15).

4. The method of claim 3, **characterised in that** the aperture is realised after the welding and/or sintering.

5. The method according to claim 3, **characterised in that**, before closing the aperture, a part of the particle material (6) is removed from the at least a cavity (11).

6. The method according to claim 1, **characterised by** defining at least a cavity (11) with stiffening elements (16).

7. The method of claim 1, **characterised in that** the particle material (6) is a metallic particle material.

8. The method of claim 7, **characterised in that** the metallic particle material is a weldable or sinterizable particle material.

9. The method according to claim 1, **characterised in that** the component (1) is a thin wall component.

10. The method according to claim 1, **characterised in that** the component is an airfoil (20).

11. The method of claim 1, **characterised in that** the particle material (6) is a plastic particle material.

12. The method of claim 1, **characterised in that** during welding the particle material (6) is welded by defining larger elements (18) than the particle material (6) but smaller than the cavity (11) that contains them.

13. The method of claim 1, **characterised in that** the substrate base (4) is a pre-manufactured body to join to the component (1).

14. The method of claim 1, **characterised in that** welding and/or sintering include laser or electron beam welding and/or sintering.
